# EUROPÄISCHE PATENTSCHRIFT

(11) **EP 3 443 625 B1**
(45) Veröffentlichungstag und Bekanntmachung des Hinweises auf die Patenterteilung: **01.05.2024**
(21) Anmeldenummer: 17714670.1
(22) Anmeldetag: 24.03.2017
(51) Int. Cl.: H02B 1/56, H02G 5/10

(54) **KÜHLVORRICHTUNG ZUM EINSATZ IN EINER SCHALTANLAGE**
COOLING APPARATUS FOR USE IN A SWITCHING STATION
DISPOSITIF DE REFROIDISSEMENT CONÇU POUR ÊTRE UTILISÉ DANS UN SYSTÈME DE COMMUTATION

(30) Priorität: 30.05.2016 DE 102016209289
(43) Veröffentlichungstag der Anmeldung: 20.02.2019
(73) Patentinhaber: Siemens Aktiengesellschaft, 80333 München (DE)
(72) Erfinder: HILD, Thomas, 56414 Wallmerod (DE); KRÖGER, Achim, 61191 Rosbach (DE); ZHU, Chunhui, 13591 Berlin (DE)
(74) Vertreter: Siemens Patent Attorneys
(86) Internationale Anmeldenummer: PCT/EP2017/057037
(87) Internationale Veröffentlichungsnummer: WO 2017/207128

(56) Entgegenhaltungen:
- EP-A1- 1 906 503
- EP-A1- 2 608 330
- DE-A1- 1 440 873
- US-A1- 2002 080 564

## Beschreibung

Die Erfindung betrifft eine Kühlvorrichtung zum Einsatz in einer Schaltanlage.

Schaltanlagen, z.B. Mittelspannungsschaltanlagen, erwärmen sich während des Betriebes auf Grund des ohmschen Widerstandes der Strombahn und der Übergangswiderstände zwischen zwei leitenden Bauteilen der Strombahn. Hieraus resultiert in Abhängigkeit vom Betriebsstrom eine bestimmte Wärmeverlustleistung. Die Schaltanlagen werden in ihrem Bemessungsbetriebsstrom so ausgelegt, dass die zulässigen normativen Grenztemperaturen nicht überschritten werden, um Schäden durch Überhitzung zu verhindern. Grenztemperaturen für Mittelspannungsschaltanlagen werden z.B. in der Norm IEC 62271-1 geregelt.

Um einen möglichst hohen Bemessungsstrom zu ermöglichen, ohne die Grenztemperaturen zu überschreiten, muss die Wärmeentwicklung minimiert und die Wärmeabfuhr aus der Anlage durch Wärmeleitung, Konvektion oder Wärmestrahlung maximiert werden. Man unterscheidet dabei üblicherweise passive und aktive Kühlung. Passive Maßnahmen zu Kühlung wären beispielsweise eine entsprechende Auslegung von Leiterquerschnitten und von festen und beweglichen Kontaktstellen (geschraubte Leiterverbindungen, Schaltkontaktsysteme etc.) mit geringem Übergangswiderstand, z.B. durch Versilberung der Kontakte, um möglichst Erwärmung zu reduzieren bzw. gleichmäßig zu verteilen. Teilweise werden zusätzliche Kühlelemente vorgesehen, die Wärme an Stellen hoher Erwärmung (sog. Hotspots) dissipieren bzw. abführen. So kommen z.B. bei gasisolierten Anlagen Kühlkörper/-bleche im Gasraum, zusätzliche Gasbehälter zur Vergrößerung des Gasraumes, Kühlrippen an Gasbehältern und Oberflächenbeschichtungen zur Verbesserung der Wärmestrahlungseigenschaften zum Einsatz.

Aktive Kühlung wird z.B. durch Nutzung von Lüftern außerhalb des Gasraumes von gasisolierten Schaltanlagen, für erzwungene Konvektion zur Kühlung der Metallkapselung (Gasbehälter) und der darin befindlichen Komponenten realisiert. Mit Hilfe einer aktiven Kühleinrichtung kann Wärme absorbiert, oder die natürliche Wärmeabfuhr verstärkt werden. Beispielsweise können Lüfter durch eine Rotorbewegung einen solchen kühlenden Luftstrom erzeugen. Ein Beispiel für eine aktive Kühlung in einem Niederspannungsleistungsschalter durch einen Lüfter ist in der DE 10 2008 049 566 A1 beschrieben.

Es ist bekannt, für aktive Kühlungslösungen von stromtragenden Elementen die Energieversorgung durch Speisung aus dem Strom der gekühlten Elemente bereitzustellen. Derartige Lösungen sind z.B. in den Druckschriften EP 2608330 A1, DE 1440873 A1 und US 2002080564 A1 offenbart.

Gängige Lüfter-Modelle sind jedoch nicht für einen jahrelangen Betrieb in hermetisch geschlossenen Mittelspannungsschaltanlagen geeignet, da ihre Elektronik sehr fehleranfällig und kurzlebig ist.

Die Erfindung hat zur Aufgabe, ein zu herkömmlichen Lüftern alternatives aktives Kühlungskonzept anzugeben, welches sich besonders für den Einsatz in Schaltanlangen eignet.

Die Aufgabe wird durch eine Kühlvorrichtung nach einem der Ansprüche 1 oder 2 gelöst. Vorteilhafte Weiterbildungen sind in den Unteransprüchen angegeben.

Die Erfindung beruht auf der Idee, mittels der Wechselwirkung von Magnetfeldern einen Rotor anzutreiben und so einen Luftstrom zur Kühlung zu erzeugen.

Gemäß einer ersten Ausgestaltung des erfindungsgemäßen Gedankens wird eine Kühlvorrichtung zum Einsatz in einer Schaltanlage vorgeschlagen, welche mit einem Lager (vorzugsweise Lager mit Wälzelementen, z.B. Nadellager) gebildet ist, mittels welchem ein Trägerkörper (vorzugsweise aus Kunststoff) drehbar bzw. rotierbar gelagert ist. Auf dem Trägerkörper ist eine Vorrichtung zur Erzeugung eines ersten Magnetfeldes angeordnet, und wenigstens ein auf dem Trägerkörper angeordnetes Fächerelement (typischerweise Rotorblatt bzw. Rotorblätter) ist für die Erzeugung einer Gasströmung (Luft u.a.) vorgesehen. Dabei ist die Kühlvorrichtung für eine Anbringung bei einem stromdurchflossenen Leiter derart ausgestaltet, dass durch die Wechselwirkung zwischen einem durch den stromdurchflossenen Leiter erzeugten zweiten Magnetfeld und dem ersten Magnetfeld eine Bewegung des Trägerkörpers mit dem wenigstens einem Fächerelement erzeugbar ist.

Eine zweite Ausgestaltung des erfindungsgemäßen Gedankens betrifft eine Kühlvorrichtung zum Einsatz in einer Schaltanlage, bei welcher ein zweites Magnetfeld mittels eines stationär gelagerten Elements erzeugt wird. Diese Kühlvorrichtung umfasst ebenfalls ein Lager (vorzugsweise ein Lager mit Wälzelementen, z.B. Nadellager), mittels welchem ein Trägerkörper (vorzugsweise aus Kunststoff) drehbar bzw. rotierbar gelagert ist, und eine auf dem Trägerkörper angeordnete Vorrichtung zur Erzeugung eines ersten Magnetfeldes. Auf dem Trägerkörper ist wenigstens ein Fächerelement (typischerweise Rotorblatt bzw. Rotorblätter) für die Erzeugung einer Gasströmung (Luft u.a.) vorgesehen. Die zweite Ausgestaltung des Erfindungsgegenstands ist mit einem bzgl. dem Lager stationär gelagerten Element bzw. einem Stator gebildet, welches bzw. welcher für die Erzeugung eines zweiten Magnetfeldes (z.B. mit Hilfe von wenigstens einem Permanentmagneten oder/und wenigstens einem Elektromagneten) ausgestaltet ist. Das bzgl. dem Lager stationär gelagerte Element kann z.B. fest mit dem Lager verbunden sein und kann auch - falls mit wenigstens einem Elektromagneten versehen - für eine Energieversorgung des wenigstens einen Elektromagneten durch Auskopplung von Energie aus dem stromdurchflossenen Leiter ausgestaltet sein (Versorgung über Leiter und erforderliche Schaltelemente). Die Kühlvorrichtung ist derart ausgestaltet, dass durch die Wechselwirkung zwischen dem zweiten Magnetfeld und dem ersten Magnetfeld eine Bewegung des Trägerkörpers mit dem wenigstens einen Fächerelement erzeugt wird.

Sowohl bei der ersten wie bei der zweiten Ausgestaltung ist zudem eine auf dem Träqerkörper (4) montierte Vorrichtung zur Energieversorgung der Vorrichtung zur Erzeugung des ersten Magnetfeldes vorgesehen, die als Stromwandler mit einem für ein Umfassen des stromdurchflossenen Leiters ausgestalteten, aus magnetischem Material (z.B. Eisen, vorzugsweiße Blechpakete zur Verhinderung von Wirbelströmen) bestehenden Ring und wenigstens einer den Ring zumindest abschnittsweise umgebenden Spule ausgebildet ist.

Bei der erfindungsgemäß mittels Magnetfeldern erzeugbaren bzw. erzeugten Bewegung handelt es sich vorzugsweise um eine Rotation, aber auch eine Vibration bzw. eine Hin- und Herbewegung zwischen zwei Stellungen ist denkbar.

Das Lager ist für ein Umfassen bzw. Umgreifen des stromdurchflossenen Leiters ausgestaltet. Vorzugsweise ist dann die Kühlvorrichtung mit wenigstens einem Sicherungsring gegen eine Verschiebung entlang des stromdurchflossenen Leiters (bzw. entlang axialer Richtung) versehen.

Gemäß einer Ausgestaltung generiert die auf dem Träqerkörper montierte Vorrichtung zur Energieversorgung der Vorrichtung zur Erzeugung des ersten Magnetfeldes durch Auskopplung von Energie aus dem stromdurchflossenen Leiter einen Versorgungsstrom und die Kühlvorrichtung umfasst wenigstens eine Diode zur Gleichrichtung dieses Versorgungsstroms.

Gemäß einer Ausgestaltung ist die Vorrichtung zur Erzeugung eines ersten Magnetfeldes mit wenigstens einem Elektromagneten gebildet. Entsprechend einer Weiterbildung ist die Vorrichtung zur Erzeugung einer Mehrzahl von ersten Magnetfeldern mit einer Mehrzahl von Elektromagneten gebildet und die Kühlvorrichtung weist Mittel (z.B. induktive und/oder kapazitive Schaltelemente) zur Veränderung der Phasenlage der einzelnen durch die Elektromagneten erzeugten ersten Magnetfelder auf. Die Phasenlagen der ersten Magnetfelder sind gemäß dieser Ausführungsform mittels der Mittel zur Veränderung der Phasenlage für eine im Hinblick auf eine Kühlung optimierte Bewegung des Trägerkörpers mit dem wenigstens einen Fächerelement festgelegt. Dabei kann insbesondere auch eine dynamische Anpassung der Phasenlagen nach Maßgabe der Position des Trägerkörpers bzw. des wenigstens einen Fächerelements vorgesehen sein.

Gegenstand der Anmeldung ist auch eine Schaltanlage mit einem stromdurchflossenen Leiter und einer erfindungsgemäßen Kühlvorrichtung, welche bei dem stromdurchflossenen Leiter angeordnet ist. Gemäß einer Weiterbildung kann die Schaltanlage mit einer Überwachungsvorrichtung (z.B. auf Basis von Hall-Sensoren oder einer Kamera) zur Überwachung der Kühlvorrichtung ausgestattet sein.

Die Erfindung wird im Folgenden im Rahmen von Ausführungsbeispielen anhand von Figuren näher beschrieben. Es zeigen:
Fig. 1: eine erste Ausführungsform einer erfindungsgemäßen Kühlvorrichtung,
Fig. 2: ein erstes Schnittbild einer erfindungsgemäßen Kühlvorrichtung,
Fig. 3: ein zweites Schnittbild einer erfindungsgemäßen Kühlvorrichtung,
Fig. 4: Details der Lagerung einer erfindungsgemäßen Kühlvorrichtung,
Fig. 5: eine Konzeptdarstellung für die erste Ausführungsform einer erfindungsgemäßen Kühlvorrichtung,
Fig. 6: eine schematische Darstellung zur Ableitung einer Spannung zur Erzeugung eines geeignet gepolten zweiten Magnetfeldes durch Energieentnahme aus dem stromdurchflossenen Leiter,
Fig. 7: eine zweite Ausführungsform einer erfindungsgemäßen Kühlvorrichtung, und
Fig. 8: eine Konzeptdarstellung für die zweite Ausführungsform einer erfindungsgemäßen Kühlvorrichtung.

Durch die Verwendung eines geeigneten Lüfters innerhalb des Gasraumes einer gasisolierten Schaltanlage kann eine erhebliche Luft- bzw. Gasströmung erzeugt werden. Diese sorgt für einen beschleunigten Wärmeabtransport von der erwärmten Strombahn zur deutlich kühleren Behälteraußenwand. Der erfindungsgemäß vorgeschlagene Lüfter zeichnet sich dadurch aus, dass er auf dem nachfolgenden Konzept beruht:
Innerhalb des Gasraumes befinden sich stromdurchflossene Leiter. Der vorzugsweise runde Leiter ist von einem Lager mit Wälzelementen (z.B. ein Nadellager) umgeben. Mit Hilfe von Sicherungsringen wird neben der zulässigen Rotationsbewegung ein Verrutschen axial zum stromdurchflossenen Leiter verhindert. Der drehbare Außenring des Lagers ist fest mit einem Trägerkörper, der auf Grund der Massenträgheit und zwecks Isolation vorzugsweise aus Kunststoff ausgeführt ist, verbunden. Auf dem drehbar gelagerten Trägerkörper befinden sich Rotorblätter, Spulen, Dioden und ein Stromwandler.

Die Rotorblätter erzeugen bei Drehung die zur Kühlung benötigte Luft- bzw. Gasströmung unmittelbar um den vom Stromdurchfluss erwärmten Leiter herum. Der Stromwandler nutzt die Energie des stromdurchflossenen Leiters um die mit Dioden beschalteten Spulen mit Wechselstrom zu speisen.

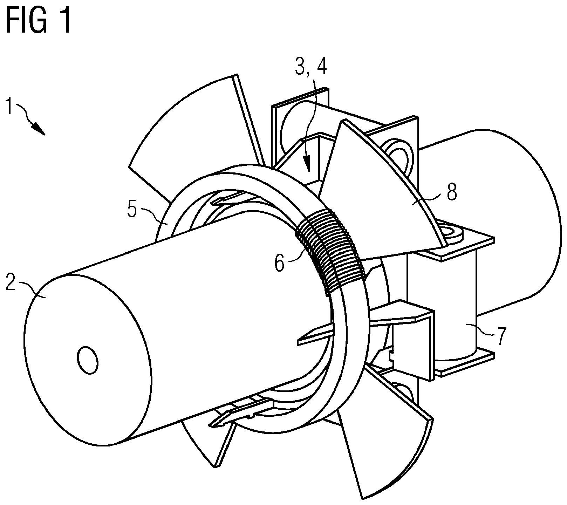

Fig. 1 zeigt eine erste Ausgestaltung eines erfindungsgemäßen Lüfters bzw. einer erfindungsgemäßen Kühlvorrichtung 1. Diese ist mittels eines Lagers 3 an einer Stromschiene 2 befestigt. Auf dem Lager 3 ist eine Kunststoffhalterung 4 angebracht, welche die weiteren Elemente der Kühlvorrichtung 1 trägt. Zur Energieversorgung aus der Stromschiene 2 ist die Kühlvorrichtung 1 mit einem die Stromschiene 2 umfassenden Eisenring 5 versehen, um welchen eine Spule 6 gewickelt ist. Mit den Eisenring 5 und der Spule 6 wird ein Stromwandler realisiert, durch den vier Elektromagnete 7 gespeist werden. Es sind zudem für die Erzeugung einer Luft- bzw. Gasströmung vorgesehene Rotorblätter 8 gezeigt.

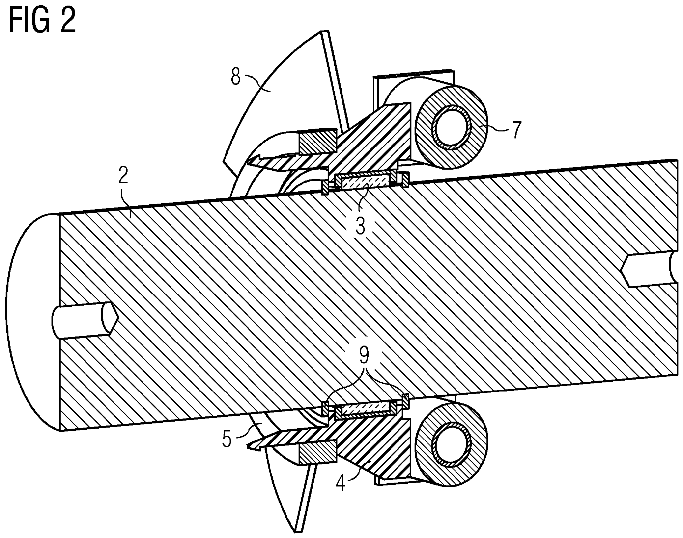

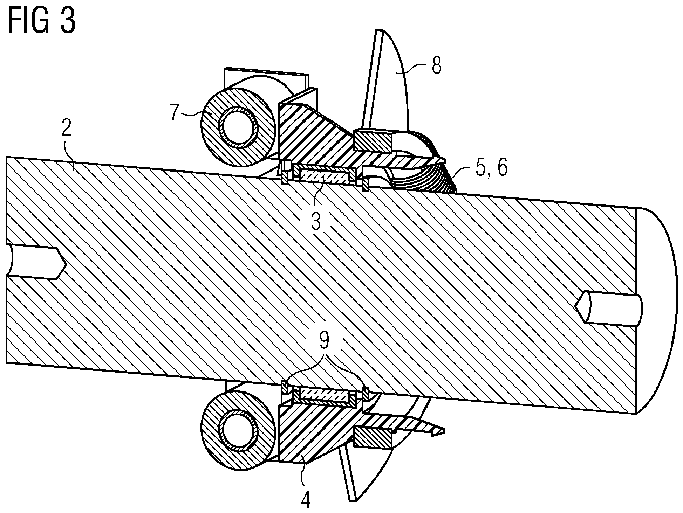

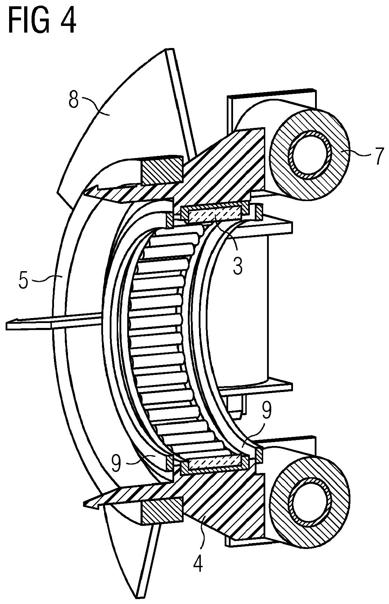

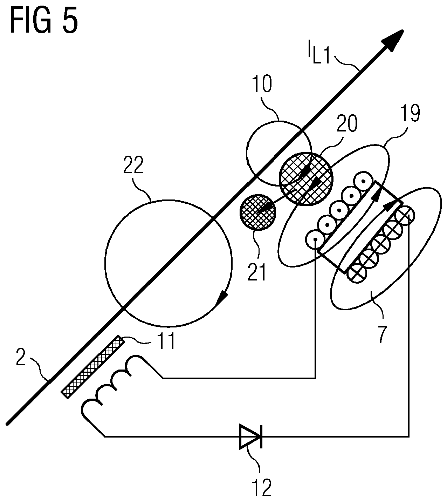

Schnittdarstellungen der Lagerung zeigen Fig. 2 und Fig. 3. An der Stromschiene 2 ist ein Keramik-Nadellager 3 befestigt, auf welchem die die Kunststoffhalterung 4 angeordnet ist. Diese Kunststoffhalterung 4 trägt u.a. den Eisenring 5, welcher Teil des Stromwandlers ist, mit dem die Energieversorgung des Elektromagneten 7 (vorzugsweise als Luftspule ausgebildet) realisiert ist, und die Rotorblätter 8. Sicherungsringe 9 sind vorgesehen, um eine Verschiebung des Lagers 3 entlang der Stromschiene 2 zu unterbinden. Fig. 4 zeigt einen Schnitt durch die Kühlvorrichtung 1, wobei die Stromschiene 2 weggelassen wurde. So sind mehr Details des Keramik-Nadellagers 3 und der Sicherungsringe 9 sowie der Lagerung des Eisenrings 5 auf der Kunststoffhalterung 4 zu sehen. Die Kunststoffhalterung 4 und die darauf angeordneten Elemente (z.B. Eisenring 5, Elektromagnete 7, Rotorblätter 8 ...) sind somit um die Stromschiene 2 drehbar gelagert. Der Antrieb für eine Rotation wird mittels Magnetfeldern bewirkt, was im Folgenden anhand Fig. 5 beschrieben wird.

Fig. 5 zeigt eine schematische Darstellung der Schaltung und Funktionsweise der ersten Ausgestaltung der erfindungsgemäßen Kühlvorrichtung 1. Durch die Stromschiene 2 fließt Wechselstrom, welcher um die Schiene 2 herum ein Magnetfeld 10 erzeugt, welches im Folgenden als zweites Magnetfeld bezeichnet wird. Zur Energieversorgung der Kühlvorrichtung 1 ist ein Stromwandler 11 vorgesehen, welcher - wie in den Figur 1 gezeigt - mit einem Eisenring 5, um welchen eine Spule 6 gewickelt ist, gebildet ist. Durch den Stromwandler 11 wird eine Stromversorgung des Elektromagneten bzw. der Spule 7 realisiert. Der Stromwandler ist konzeptionell ein induktiver Stromwander, der auch als Durchsteckwandler bezeichnet wird.

In die Stromversorgung des Elektromagneten 7 ist eine Diode 12 eingeschleift. Die Diode 12 sperrt die negative Halbwelle in Richtung der Spule 7. Die Diode 12 bzw. eine Diodenschaltung mit mehreren Dioden sorgt somit für einen pulsierenden Stromfluss, da die negative Halbwelle in Richtung der Spule 7 blockiert ist. Durch den pulsierenden Stromfluss kommt es in der Spule 7 zu einem variierend starken Magnetfeld (im Folgenden auch als erstes Magnetfeld bezeichnet), bei dem sich aber der magnetische Nord- und Südpol immer gleichbleibend ausbildet. Die Spulen 7 besitzen vorzugsweise keinen oder nur einen weichmagnetischen Ferritkern, um eine Hysterese zu verhindern.

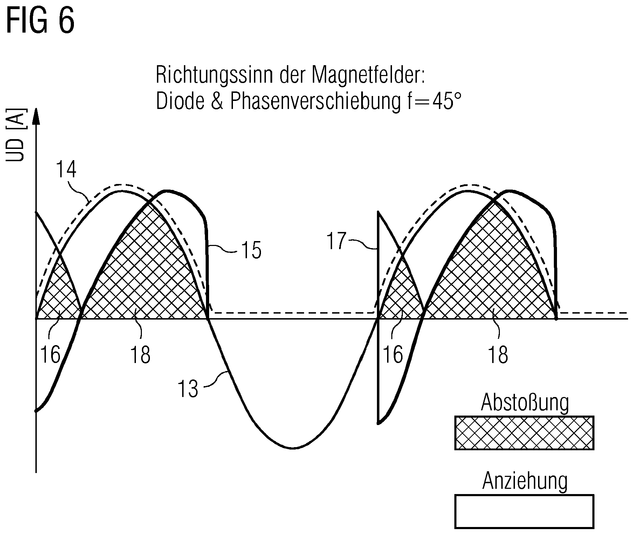

Fig. 6 zeigt die idealisierten Strom- und Spannungsverläufe in Primärkreis und Sekundärkreis. Die vollständige Sinuslinie 13 (durchgezogen) beschreibt den idealisierten Strom- und Spannungsverlauf des Primärleiters. Die Spannung an der Spule bzw. dem Elektromagneten 7 im Sekundärkreis ist gestrichelt dargestellt (Bezugszeichen 14). Auf Grund des Winkelfehlers vom Stromwandler und der Spule ist der Sekundärstrom 15 an der Spule (zweite durchgezogene Linie) nacheilend. Wie in Fig. 6 gezeigt, sind teilweise die Vorzeichen des Primärstroms und des Stroms an der Spule 7 unterschiedlich, was bei einer geeigneten Anordnung der Spule 7 dazu führt, dass sich das zweite (durch den Primärstrom erzeugte) Magnetfeld und das erste (durch die Spule 7 erzeugte) Magnetfeld abstoßen. Diese Abstoßung hängt von der Stärke der Magnetfelder und damit auch der Stromstärken ab. Dies ist in Fig. 6 durch die Fläche 16 veranschaulicht, die die Schnittfläche der beiden Stromkurven für den Fall von Abstoßung zeigt (wobei der Betrag 17 des negativen Abschnitts genommen wurde). Entsprechend veranschaulicht Die Fläche 18 eine Anziehung der Magnetfelder.

In Fig. 5 ist das durch die Spule 7 erzeugte erste Magnetfeld mit dem Bezugszeichen 19 bezeichnet. Mit der Orientierung des dort dargestellten ersten und zweiten Magnetfelds, 19 bzw. 10, resultiert eine Abstoßung, durch welche die Spule 7 von einem Bereich 20 starker Abstoßung in einen Bereich schwächerer Abstoßung 21 abgelenkt wird. Durch geeignete Anordnung der Spule 7 bzw. einer Mehrzahl von verwendeten Spulen resultiert eine Drehung 22 der Kühlvorrichtung 1 um die Stromschiene 2.

Durch entsprechende Anordnung der Spule 7 auf dem Trägerkörper lässt sich also eine Anziehungs- bzw. Abstoßungskraft zwischen dem Magnetfeld der Spule und dem Magnetfeld des stromdurchflossenen Leiters erzielen, die ähnlich einem Elektromotor zu einer Drehbewegung des gesamten Trägerkörpers führt.

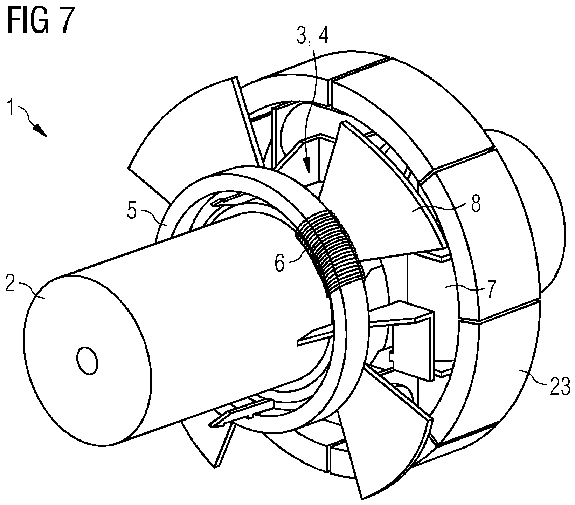

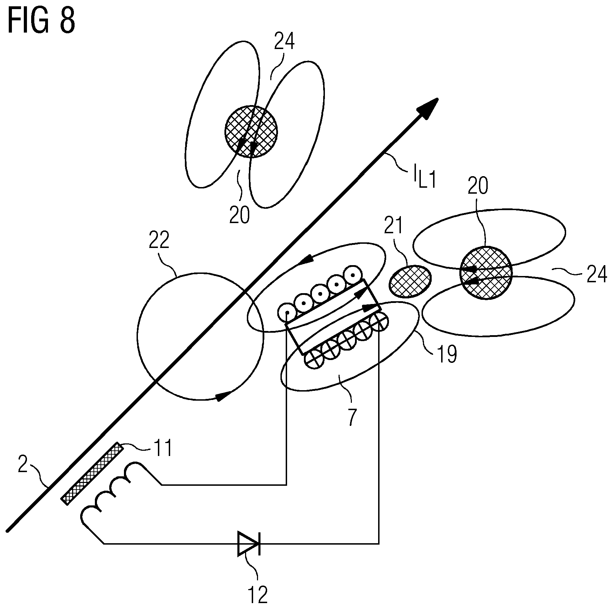

In Fig. 7 ist eine zweite Ausgestaltung eines erfindungsgemäßen Lüfters bzw. einer erfindungsgemäßen Kühlvorrichtung 1 gezeigt. Der Aufbau ist wie bei dem ersten, anhand der vorigen Figuren beschriebenen Konzept, nur befindet sich in unmittelbarer Nähe zum Trägerkörper/Lüfter auf dem stromdurchflossenen Leiter zusätzlich ein Stator 23 (z.B. in Form eines Ringes aus Neodym-Magneten). Die Magnete des Stators 23 sind dabei so ausgerichtet, dass Sie dem Magnetfeld der Spulen durch anziehende und/oder abstoßende Wirkung entgegenwirken und es somit ähnlich einem Elektromotor zu einer Drehbewegung des gesamten Trägerkörpers kommt. Eine schematische Darstellung der zweiten Ausgestaltung ist in Fig. 8 gezeigt. Dabei sind zwei auf dem Stator 23 angeordnete Magnete 24 gezeigt. Die Ansteuerung von auf dem Stator 23 angeordneten Magneten 24 kann bzgl. Phase und Stärke des Magnetfeldes für eine Rotation der Kühlvorrichtung 1 um den Leiter 2 optimiert sein. Ebenso kann durch die Anordnung bzgl. Abstand und Winkelausrichtung von auf dem Stator 23 angeordneten Magneten 24 eine Optimierung der Rotation erzielt werden.

Beide Ausgestaltungen des Erfindungsgegenstands zeichnen sich zudem dadurch aus, dass die erfindungsgemäße Kühlvorrichtung 1 völlig unabhängig von äußeren Einflüssen und selbstregulierend arbeitet. Die Drehzahl des Lüfters 1 ist abhängig von der Stromstärke des stromdurchflossenen Leiters, dessen Netzfrequenz und der Massenträgheit der drehbar gelagerten Lüfter-Baugruppe. Um eine einwandfreie Funktion sicherzustellen, kann optional eine Funktionskontrolle durch die Verwendung von Hall-Sensoren und/oder einer Kamera, die auf den Lüfter gerichtet ist, durchgeführt werden.

Die erfindungsgemäßen Konzepte haben eine Reihe von Vorteilen. Im Gegensatz zu gängigen Lüftern wird der vorgeschlagene "selbstdrehende Lüfter" von einem sich mit den Rotorblättern drehenden Stromwandler versorgt. Er arbeitet selbstregulierend, da seine Drehzahl abhängig von der Stromstärke des stromdurchflossenen Leiters (z.B. eine runde Stromschiene), dessen Netzfrequenz und der Massenträgheit der drehbar gelagerten Lüfter-Baugruppe ist. Bei größeren Stromstärken wird auch mehr Luftkonvektion zur Kühlung benötigt, somit passt sich der Lüfter bedarfsgerecht, ohne eine aufwendige und anfällige Steuerung, durch Erhöhung der Drehzahl an. Wird keine oder nur eine geringe Kühlleistung benötigt, sorgt die geringere Drehzahl für eine verlängerte Lebensdauer der Baugruppe.

Gängige Lüfter werden über einen einphasigen Wechselstrommotor oder einem EC-Motor betrieben. Jedoch unterliegen die Kommutator-Bürsten eines Wechselstrommotors einem erhöhten Verschleiß oder verursachen unter Umständen sogar Bürstenfeuer. Sie sind somit für einen Einsatz in einem hermetisch geschlossenen Gasraum ungeeignet. Einphasige Asynchronmotoren hingegen benötigen einen Start-Kondensator, dessen Lebensdauer ebenfalls beschränkt ist. Die weitverbreiteten EC-Motoren funktionieren nur in Zusammenhang mit einer elektronischen Steuerung, die ein dreiphasiges Drehfeld für den Motor generiert. Doch neben der eingeschränkten Lebensdauer der Steuerelektronik, durch den Einsatz von vielen Elektronikbauteilen (mitunter auch Kondensatoren), kann es zu Störungen durch das starke Magnetfeld des stromdurchflossenen Leiters kommen. Von einer Platzierung in unmittelbarer Nähe zum stromdurchflossenen Leiter ist somit abzusehen. Darüber hinaus ist in hermetisch geschlossenen Systemen ein Austausch von defekten Komponenten nicht mehr möglich. Im Gegensatz zu gängigen Lüftern mit viel Steuerelektronik wird beim "selbstdrehende Lüfter" nur auf wenige und sehr robuste Bauteile zurückgegriffen. Die Lebensdauer von Spulen und Dioden ist deutlich größer als die von aufwendigen elektronischen Schaltungen (mitunter auch mit Kondensatoren).

Daher eignet sich der selbstdrehende Lüfter besser für einen Einsatz in hermetisch geschlossenen Systemen und in unmittelbarer Nähe zu stromdurchflossenen Leitern, als andere gängige Lüfter-Systeme. Optional kann die korrekte Funktion des Lüfters über Hall-Sensoren und/oder eine Kamera, die auf den Lüfter gerichtet ist, überprüft werden. Dadurch kann durch Einbindung einer Meldestelle (z.B. die Leitwarte der Schaltanlage) unmittelbar auf eine Fehlfunktion des Lüfters reagiert werden.

Die Erfindung wurde im Zusammenhang mit einer Mittelspannungsschaltanlage beschrieben, ist aber nicht auf diesen Anwendungsfall beschränkt, sondern kann in unterschiedlichsten technischen Konstellationen zum Einsatz kommen, bei denen eine aktive Kühlung vorgesehen wird. Insbesondere kann die erfindungsgemäße Kühlung auch in Nieder- und Hochspannungsanlagen (mit ggf. erforderlichen Anpassungen) eingesetzt werden. Auch eine Verwendung für Rechnerkühlung ist u.U. sinnvoll.

## Patentansprüche

1. Kühlvorrichtung zum Einsatz in einer Schaltanlage, umfassend
- ein Lager (3), mittels welchem ein Trägerkörper (4) drehbar gelagert ist,
- eine auf dem Trägerkörper (4) angeordnete Vorrichtung zur Erzeugung eines ersten Magnetfeldes (19),
- wenigstens ein auf dem Trägerkörper (4) angeordnetes Fächerelement (9) für die Erzeugung einer Gasströmung, und
- eine auf dem Trägerkörper (4) montierte Vorrichtung zur Energieversorgung der Vorrichtung zur Erzeugung des ersten Magnetfeldes, die als Stromwandler mit einem für ein Umfassen des stromdurchflossenen Leiters ausgestalteten, aus magnetischem Material bestehenden Ring und wenigstens einer den Ring zumindest abschnittsweise umgebenden Spule ausgebildet ist,
wobei
- die Vorrichtung zur Erzeugung des eines ersten Magnetfeldes (19) derart angeordnet ist und die Kühlvorrichtung für eine Anbringung bei einem stromdurchflossenen Leiter (2) derart ausgestaltet ist, dass durch die Wechselwirkung zwischen einem durch den stromdurchflossenen Leiter (2) erzeugten zweiten Magnetfeld (10) und dem ersten Magnetfeld (19) eine Bewegung des Trägerkörpers (4) mit dem wenigstens einen Fächerelement (8) erzeugt wird, und
- das Lager (3) für ein Umfassen des stromdurchflossenen Leiters (2) ausgestaltet ist.

2. Kühlvorrichtung zum Einsatz in einer Schaltanlage, insbesondere für die Anbringung bei einem stromdurchflossenen Leiter (2), umfassend
- ein Lager (3), mittels welchem ein Trägerkörper (4) drehbar gelagert ist,
- eine auf dem Trägerkörper (4) angeordnete Vorrichtung zur Erzeugung eines ersten Magnetfeldes (19),
- wenigstens ein auf dem Trägerkörper (4) angeordnetes Fächerelement (8) für die Erzeugung einer Gasströmung,
- ein bzgl. dem Lager (3) stationär gelagertes Element (23), welches für die Erzeugung eines zweiten Magnetfeldes (10) ausgestaltet ist, und
eine auf dem Trägerkörper (4) montierte Vorrichtung zur Energieversorgung der Vorrichtung zur Erzeugung des ersten Magnetfeldes, die als Stromwandler mit einem für ein Umfassen des stromdurchflossenen Leiters ausgestalteten, aus magnetischem Material bestehenden Ring und wenigstens einer den Ring zumindest abschnittsweise umgebenden Spule ausgebildet ist,
wobei
- die Vorrichtung zur Erzeugung des eines ersten Magnetfeldes (19) derart angeordnet ist und die Kühlvorrichtung derart ausgestaltet ist, dass durch die Wechselwirkung zwischen dem zweiten Magnetfeld (10) und dem ersten Magnetfeld (19) eine Bewegung des Trägerkörpers (4) mit dem wenigstens einen Fächerelement (8) erzeugt wird, und
- das Lager (3) für ein Umfassen des stromdurchflossenen Leiters (2) ausgestaltet ist.

3. Kühlvorrichtung nach einem der Ansprüche 1 oder 2, **dadurch gekennzeichnet, dass**
die Bewegung des Trägerkörpers (4) mit dem wenigstens einen Fächerelement (8) eine Rotationsbewegung ist.

4. Kühlvorrichtung nach einem der vorhergehenden Ansprüche, **dadurch gekennzeichnet, dass**
die Kühlvorrichtung wenigstens einen Sicherungsring (9) gegen eine Verschiebung entlang des stromdurchflossenen Leiters (2) aufweist.

5. Kühlvorrichtung nach einem der vorhergehenden Ansprüche, **dadurch gekennzeichnet, dass**
- die auf dem Träqerkörper (4) montierte Vorrichtung zur Energieversorgung der Vorrichtung zur Erzeugung des ersten Magnetfeldes dafür ausgebildet ist, durch Auskopplung von Energie aus dem stromdurchflossenen Leiter (2) einen Versorgungsstrom zu generieren, und
- die Kühlvorrichtung wenigstens eine Diode (12) zur Gleichrichtung des Versorgungsstroms umfasst.

6. Kühlvorrichtung nach einem der vorhergehenden Ansprüche, **dadurch gekennzeichnet, dass**
die Vorrichtung zur Erzeugung eines ersten Magnetfeldes (19) mit wenigstens einem Elektromagneten (7) gebildet ist.

7. Kühlvorrichtung nach einem der vorhergehenden Ansprüche, **dadurch gekennzeichnet, dass**
- die Vorrichtung zur Erzeugung eines ersten Magnetfeldes (19) für die Erzeugung von einer Mehrzahl von ersten Magnetfeldern (19) ausgebildet mit einer Mehrzahl von Elektromagneten (7) gebildet ist,
- die Kühlvorrichtung mit Mitteln zur Veränderung der Phasenlage der einzelnen durch die Elektromagneten (7) erzeugten ersten Magnetfelder (19) gebildet ist, und
- die Phasenlagen der ersten Magnetfelder (19) mittels der Mittel zur Veränderung der Phasenlage für eine im Hinblick auf eine Kühlung optimierte Bewegung des Trägerkörpers mit dem wenigstens einen Fächerelement (8) festgelegt sind.

8. Kühlvorrichtung nach einem der Ansprüche 2 bis 7,
**dadurch gekennzeichnet, dass**
das bzgl. dem Lager (3) stationär gelagerte Element fest mit dem Lager (3) verbunden ist.

9. Kühlvorrichtung nach einem der Ansprüche 2 bis 8,
**dadurch gekennzeichnet, dass**
das bzgl. dem Lager (3) stationär gelagerte Element mit einem Permanentmagneten gebildet ist.

10. Kühlvorrichtung nach einem der Ansprüche 2 bis 8, **dadurch gekennzeichnet, dass**
das bzgl. dem Lager stationär gelagerte Element mit Elektromagneten gebildet ist.

11. Kühlvorrichtung nach Anspruch 10,
**dadurch gekennzeichnet, dass**
das bzgl. dem Lager (3) stationär gelagerte Element für eine Energieversorgung des Elektromagneten (7) durch Auskopplung von Energie aus dem stromdurchflossenen Leiter (2) ausgestaltet ist.

12. Schaltanlage mit
- einem stromdurchflossenen Leiter (2), und
- einer Kühlvorrichtung nach einem der Ansprüche 1 bis 11, welche bei dem stromdurchflossenen Leiter (2) angeordnet ist.

13. Schaltanlage nach Anspruch 12,
**dadurch gekennzeichnet, dass**
die Schaltanlage mit einer Überwachungsvorrichtung zur Überwachung der Kühlvorrichtung ausgestattet ist.

## Claims

1. Cooling device for use in a switchgear installation, comprising
- a bearing (3), by means of which a carrier body (4) is rotatably mounted,
- a device arranged on the carrier body (4) and serving for generating a first magnetic field (19),
- at least one fan element (9) arranged on the carrier body (4), for the generation of a gas flow, and
- a device mounted on the carrier body (4) and serving for supplying energy to the device for generating the first magnetic field, which is designed as a current transformer having a ring consisting of magnetic material, said ring being configured for encompassing the conductor through which current flows, and at least one coil surrounding the ring at least in portions, wherein
- the device for generating the first magnetic field (19) is arranged in such a way, and the cooling device is configured for fitting at a conductor (2) through which current flows in such a way, that a movement of the carrier body (4) with the at least one fan element (8) is generated by the interaction between a second magnetic field (10), generated by the conductor (2) through which current flows, and the first magnetic field (19), and
- the bearing (3) is configured for encompassing the conductor (2) through which current flows.

2. Cooling device for use in a switchgear installation, in particular for fitting at a conductor (2) through which current flows, comprising
- a bearing (3), by means of which a carrier body (4) is rotatably mounted,
- a device arranged on the carrier body (4) and serving for generating a first magnetic field (19),
- at least one fan element (8) arranged on the carrier body (4), for the generation of a gas flow,
- an element (23) mounted stationarily relative to the bearing (3) and configured for generating a second magnetic field (10), and
a device mounted on the carrier body (4) and serving for supplying energy to the device for generating the first magnetic field, which is designed as a current transformer having a ring consisting of magnetic material, said ring being configured for encompassing the conductor through which current flows, and at least one coil surrounding the ring at least in portions, wherein
- the device for generating the first magnetic field (19) is arranged in such a way, and the cooling device is configured in such a way, that a movement of the carrier body (4) with the at least one fan element (8) is generated by the interaction between the second magnetic field (10) and the first magnetic field (19), and
- the bearing (3) is configured for encompassing the conductor (2) through which current flows.

3. Cooling device according to either of Claims 1 and 2, **characterized in that**
the movement of the carrier body (4) with the at least one fan element (8) is a rotational movement.

4. Cooling device according to any of the preceding claims, **characterized in that**
the cooling device has at least one securing ring (9) against displacement along the conductor (2) through which current flows.

5. Cooling device according to any of the preceding claims, **characterized in that**
- the device mounted on the carrier body (4) and serving for supplying energy to the device for generating the first magnetic field is designed to generate a supply current by coupling energy out of the conductor (2) through which current flows, and
- the cooling device comprises at least one diode (12) for rectifying the supply current.

6. Cooling device according to any of the preceding claims, **characterized in that**
the device for generating a first magnetic field (19) is formed with at least one electromagnet (7).

7. Cooling device according to any of the preceding claims, **characterized in that**
- the device for generating a first magnetic field (19) designed for the generation of a plurality of first magnetic fields (19) is formed with a plurality of electromagnets (7),
- the cooling device is formed with means for changing the phase angle of the individual first magnetic fields (19) generated by the electromagnets (7), and
- the phase angles of the first magnetic fields (19) are defined by means of the means for changing the phase angle for a movement of the carrier body with the at least one fan element (8) which is optimized in regard to cooling.

8. Cooling device according to any of Claims 2 to 7, **characterized in that**
the element mounted stationarily relative to the bearing (3) is fixedly connected to the bearing (3).

9. Cooling device according to any of Claims 2 to 8, **characterized in that**
the element mounted stationarily relative to the bearing (3) is formed with a permanent magnet.

10. Cooling device according to any of Claims 2 to 8, **characterized in that**
the element mounted stationarily relative to the bearing is formed with electromagnets.

11. Cooling device according to Claim 10,
**characterized in that**
the element mounted stationarily relative to the bearing (3) is configured for supplying energy to the electromagnet (7) by coupling energy out of the conductor (2) through which current flows.

12. Switchgear installation comprising
- a conductor (2) through which current flows, and
- a cooling device according to any of Claims 1 to 11, which is arranged at the conductor (2) through which current flows.

13. Switchgear installation according to Claim 12,
**characterized in that**
the switchgear installation is equipped with a monitoring device for monitoring the cooling device.

## Revendications

1. Dispositif de refroidissement à utiliser dans un système de commutation, comprenant :
- un palier (3), permettant un montage rotatif d'un corps de support (4),
- un dispositif agencé sur le corps de support (4) permettant de générer un premier champ magnétique (19),
- au moins un élément de soufflante (9) disposé sur le corps de support (4) permettant de générer un flux de gaz, et
- un dispositif monté sur le corps de support (4) pour l'alimentation en énergie du dispositif de génération du premier champ magnétique, qui est réalisé sous la forme d'un transformateur de courant avec un anneau en matériau magnétique conçu afin d'entourer le conducteur parcouru par du courant et au moins une bobine entourant l'anneau au moins par sections, dans lequel
- le dispositif de génération d'un premier champ magnétique (19) est agencé de telle sorte que le dispositif de refroidissement pour un montage sur un conducteur (2) parcouru par du courant est conçu de telle sorte que l'interaction entre un second champ magnétique (10) généré par le conducteur (2) parcouru par du courant et le premier champ magnétique (19) produit un mouvement du corps de support (4) avec le au moins un élément de soufflante (8), et
- le palier (3) est conçu afin d'entourer le conducteur parcouru par du courant (2).

2. Dispositif de refroidissement à utiliser dans un système de commutation, en particulier pour le montage sur un conducteur parcouru par du courant (2), comprenant :
- un palier (3), permettant un montage rotatif d'un corps de support (4),
- un dispositif agencé sur le corps de support (4) permettant de générer un premier champ magnétique (19),
- au moins un élément de soufflante (8) disposé sur le corps de support (4) permettant de générer un flux de gaz,
- un élément (23) monté fixe par rapport au palier (3), qui est conçu pour la génération d'un second champ magnétique (10), et un dispositif monté sur le corps de support (4) pour l'alimentation en énergie du dispositif de génération du premier champ magnétique, qui est réalisé sous la forme d'un transformateur de courant avec un anneau en matériau magnétique conçu afin d'entourer le conducteur parcouru par du courant et au moins une bobine entourant l'anneau au moins par sections, **dans lequel**
- le dispositif de génération d'un premier champ magnétique (19) est agencé et le dispositif de refroidissement est conçu de telle manière que l'interaction entre le second champ magnétique (10) et le premier champ magnétique (19) génère un mouvement du corps de support (4) avec le au moins un élément de soufflante (8), et
- le palier (3) est conçu afin d'entourer le conducteur parcouru par du courant (2).

3. Dispositif de refroidissement selon la revendication 1 ou 2, **caractérisé en ce que**
le mouvement du corps de support (4) avec le au moins un élément de soufflante (8) est un mouvement de rotation.

4. Dispositif de refroidissement selon l'une quelconque des revendications précédentes,
**caractérisé en ce que**
le dispositif de refroidissement présente au moins une bague de sécurité (9) à l'encontre d'un déplacement le long du conducteur parcouru par du courant (2).

5. Dispositif de refroidissement selon l'une quelconque des revendications précédentes, **caractérisé en ce que**
- le dispositif d'alimentation en énergie du dispositif de génération du premier champ magnétique monté sur le corps de support (4) est conçu afin de générer un courant d'alimentation par découplage d'énergie à partir du conducteur parcouru par du courant (2), et
- le dispositif de refroidissement comprend au moins une diode (12) permettant de redresser le courant d'alimentation.

6. Dispositif de refroidissement selon l'une quelconque des revendications précédentes,
**caractérisé en ce que**
le dispositif de génération d'un premier champ magnétique (19) est constitué d'au moins un électro-aimant (7).

7. Dispositif de refroidissement selon l'une quelconque des revendications précédentes,
**caractérisé en ce que**
- le dispositif de génération d'un premier champ magnétique (19) pour la génération d'une pluralité de premiers champs magnétiques (19) est formé avec une pluralité d'électro-aimants (7),
- le dispositif de refroidissement est formé avec des moyens afin de modifier la position de phase de chacun des premiers champs magnétiques (19) générés par les électro-aimants (7), et
- les positions de phase des premiers champs magnétiques (19) sont définies au moyen des moyens de changement de position de phase pour un mouvement optimisé du corps de support avec le au moins un élément de soufflante (8) en vue d'un refroidissement.

8. Dispositif de refroidissement selon l'une quelconque des revendications 2 à 7,
**caractérisé en ce que**
l'élément monté fixe par rapport au palier (3) est solidaire du palier (3).

9. Dispositif de refroidissement selon l'une quelconque des revendications 2 à 8,
**caractérisé en ce que**
l'élément monté fixe par rapport au palier (3) est formé d'un aimant permanent.

10. Dispositif de refroidissement selon l'une quelconque des revendications 2 à 8,
**caractérisé en ce que**
l'élément monté fixe par rapport au palier est formé d'électro-aimants.

11. Dispositif de refroidissement selon la revendication 10, **caractérisé en ce que**
l'élément monté fixe par rapport au palier (3) est conçu pour une alimentation en énergie de l'électro-aimant (7) par découplage d'énergie à partir du conducteur parcouru par du courant (2).

12. Système de commutation avec
- un conducteur parcouru par du courant (2), et
- un dispositif de refroidissement selon l'une quelconque des revendications 1 à 11, qui est agencé dans le conducteur parcouru par du courant (2).

13. Système de commutation selon la revendication 12, **caractérisé en ce que**
le système de commutation est équipé d'un dispositif de surveillance permettant de surveiller le dispositif de refroidissement.
